(19) Europäisches Patentamt / European Patent Office / Office européen des brevets

(11) **EP 4 526 842 B1**

(12) **EUROPÄISCHE PATENTSCHRIFT**

(45) Veröffentlichungstag und Bekanntmachung des Hinweises auf die Patenterteilung:
**04.03.2026 Patentblatt 2026/10**

(21) Anmeldenummer: **23722336.7**

(22) Anmeldetag: **26.04.2023**

(51) Internationale Patentklassifikation (IPC):
***G06T 7/30*** (2017.01)

(52) Gemeinsame Patentklassifikation (CPC):
**G06T 7/30;** G06T 2207/20084

(86) Internationale Anmeldenummer:
**PCT/EP2023/060893**

(87) Internationale Veröffentlichungsnummer:
**WO 2023/222343 (23.11.2023 Gazette 2023/47)**

(54) **VERFAHREN ZUM STEUERN EINER ROBOTERVORRICHTUNG**

METHOD FOR CONTROLLING A ROBOT DEVICE

PROCÉDÉ DE COMMANDE D'UN DISPOSITIF ROBOT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **16.05.2022 DE 102022204770**

(43) Veröffentlichungstag der Anmeldung:
**26.03.2025 Patentblatt 2025/13**

(73) Patentinhaber: **Robert Bosch GmbH
70442 Stuttgart (DE)**

(72) Erfinder:
• **DREWS, Florian
71272 Renningen (DE)**
• **FAION, Florian
79219 Staufen (DE)**
• **ROSENBAUM, Lars
35094 Lahntal (DE)**
• **NATROSHVILI, Koba
76337 Waldbronn (DE)**
• **GLAESER, Claudius
71254 Ditzingen (DE)**

(56) Entgegenhaltungen:
EP-A1- 3 477 616        US-A1- 2020 334 843
US-A1- 2021 117 787

## Beschreibung

Stand der Technik

Die vorliegende Offenbarung bezieht sich auf Verfahren zum Steuern einer Robotervorrichtung.

In verschiedenen Anwendungen können gute Ergebnisse erzielt werden, wenn eine Sensor(daten)fusion von verschiedenen Sensoren durchgeführt wird und eine Robotervorrichtung unter Verwendung der Ergebnisse der Sensordatenfusion gesteuert wird. Beispielsweise können beim autonomen Fahren Sensordaten von optischen Kameras, Radarsensoren, Lidarsensoren und anderen kombiniert werden, um die Zuverlässigkeit einer Objektdetektion zu erhöhen.

Es gibt Ansätze zur Sensorfusion, die auf maschinellem Lernen basieren und Ansätze, die auf der Dempster-Shafer-Theorie basieren. Je nach der für die Sensorfusion verwendeten Architektur kann jeder Sensor einen unterschiedlichen Beitrag zum Endergebnis leisten, und zwar aufgrund des Anteils der Daten, die er zu den Gesamtdaten beiträgt, der Art des Sensors, der Tageszeit, des Wetters, der Objekteigenschaften usw.

Bei der Sensorfusion kann die Verschlechterung der Messqualität selbst eines einzelnen Sensors allerdings die das Endergebnis stark beeinflussen.

Um diesem Problem zu begegnen, beschreibt die DE 10 2018 222526 A1, im Folgenden als Referenz 1 bezeichnet, eine hybride (oder Mehrwege-)Architektur. Dabei werden Daten verschiedener Sensoren auf unterschiedliche Weise fusioniert. Auf diese Weise werden redundante Erkennungen desselben Objekts erhalten. Wenn ein einzelner Sensor gestört ist, können auf diese Weise immer noch eine oder mehrere störungsfreie Modalitäten (d.h. Arten der Kombination von Sensordaten mehrerer Sensoren, insbesondere inklusive der Auswahl, von welchen Sensoren Daten kombiniert werden) erhalten werden. Unterschiedliche Modalitäten verwenden Sensordaten von den verschiedenen Sensoren mit unterschiedlichen Anteilen (z.B. bei drei Sensoren 70%-30%-0% oder 70%-15%-15% etc.) und die Abhängigkeiten des Ergebnisses von den Sensordaten kann unterschiedlich sein.

Bei der Mehrwege-Architektur kann sich eine schlechte Messqualität eines Sensors auf mehrere Modalitäten auswirken. Deshalb sind Ansätze wünschenswert, die es ermöglichen, zu ermitteln, welchen Modalitäten im Vergleich zu anderen vertraut werden kann, d.h. Ansätze, um die Vertrauenswürdigkeit der Modalitäten abzuschätzen, damit die Ergebnisse aus diesen Modalitäten dann für eine zuverlässige Steuerung verwendet werden können.

Aus der US 2021/0117787 A1 ist ein Verfahren zum Trainieren eines maschinellen Lernmodells zur Bestimmung einer Qualitätsstufe von Datensätzen von jedem einer Vielzahl von Sensoren bekannt. Die Sensoren sind so konfiguriert, dass sie Umgebungsdarstellungen erzeugen. Das Verfahren umfasst: Bereitstellung von Datensätzen jedes einzelnen Sensors aus entsprechenden Umgebungsdarstellungen; Bereitstellung von Attributdaten von Ground-Truth-Objekten der Umgebungsdarstellungen; Bestimmung eines Qualitätsgrades des jeweiligen Datensatzes jedes der Sensoren unter Verwendung einer Metrik, wobei die Metrik mindestens eine Variable, die unter Verwendung des jeweiligen Datensatzes bestimmt wird, mit mindestens einem Attributum von mindestens einem zugeordneten Ground-Truth-Objekt der Umgebungsdarstellung vergleicht; und das Trainieren des maschinellen Lernmodells unter Verwendung der Datensätze der einzelnen Sensoren und der jeweils zugeordneten ermittelten Qualitätsstufen.

Offenbarung der Erfindung

Gemäß verschiedenen Ausführungsformen wird ein Verfahren zum Steuern einer Robotervorrichtung bereitgestellt, aufweisend Empfangen, von jedem Sensor mehrerer Sensoren, eines jeweiligen Sensordatensatzes von dem Sensor, Ermitteln, für jedes Objekt einer Menge von Objekten, die mindestens ein Objekt enthält, für jede mehrerer unterschiedlicher Kombinationen der Sensordatensätze, einer Positionsvorhersage für das Objekt mittels Sensordatenfusion der Sensordatensätze gemäß der Kombination der Sensordatensätze, Ermitteln, für jedes Objekt der Menge von Objekten, für jedes Paar mehrerer Paare der Kombinationen eines Abstands zwischen den Positionsvorhersagen, die für das Objekt gemäß der Kombinationen des Paares ermittelt wurden, Zuführen der ermittelten Abstände zu einem neuronalen Netzwerk, das trainiert ist, aus Abständen zwischen Positionsvorhersagen für die Paare der Kombinationen Konfidenzinformation für die Positionsvorhersagen zu ermitteln und Steuern der Robotervorrichtung unter Verwendung einer oder mehrerer der Positionsvorhersagen unter Berücksichtigung der Konfidenzinformation.

Das oben beschriebene Verfahren ermöglicht es bei einer schlechten Messqualität eines Sensors, die Einfluss auf mehrere Modalitäten hat, einen Einfluss der schlechten Messqualität auf das Gesamtergebnis der Sensor(daten)fusion zu vermeiden oder zumindest gering zu halten. Das neuronale Netzwerk lernt die Abhängigkeiten zwischen den Modalitäten und ist somit in der Lage, einen Ausfall oder eine Abnahme der Messqualität eines Sensors zu erkennen und in den Konfidenzinformationen auszudrücken.

Die Konfidenzinformation kann beispielsweise an eine Objektverfolgungseinrichtung gegeben werden. Diese kann die Ergebnisse für die verschiedenen Modalitäten beispielsweise entsprechend ihrer Konfidenzen bei der Kombination der Ergebnisse gewichten.

Im Folgenden werden verschiedene Ausführungsbeispiele angegeben.

Ausführungsbeispiel 1 ist ein Verfahren zum Steuern einer Robotervorrichtung, wie oben beschrieben.

Ausführungsbeispiel 2 ist ein Verfahren nach Ausführungsbeispiel 1, wobei die Menge von Objekten mehrere Objekte enthält.

Damit wird die Konfidenzinformation gemeinsam für mehrere Objekte ermittelt, wodurch die Konfidenzinformation unabhängig von einer Verfolgung individueller Objekte durchgeführt werden kann.

Ausführungsbeispiel 3 ist ein Verfahren nach Ausführungsbeispiel 2, wobei die Menge von Objekten Objekte in einem vorgegebenen Teilbereich einer von den Sensoren erfassten Umgebung der Robotervorrichtung aufweist.

Die Konfidenzinformation wird also gemeinsam für Objekte ermittelt, die sich in einem Teilbereich der Umgebung der Robotervorrichtungen, die die Sensoren abdecken. Damit ist für die Ermittlung der Konfidenzinformation einerseits keine individuelle Verfolgung der Objekte innerhalb der Bereiche erforderlich, da sie gemeinsam für die Objekte ermittelt wird, und andererseits kann eine hohe Genauigkeit der Ermittlung (d.h. Schätzung) der Konfidenzinformation erreicht werden, weil in Teilbereichen der Umgebung die Bedingungen für die Sensoren weniger stark schwanken als über die gesamte Umgebung. Bei ausreichend kleinen Teilbereichen ist also die Annahme berechtigt, dass jeder Sensor für alle Objekte eines Teilbereichs eine ähnliche Genauigkeit hat.

Ausführungsbeispiel 4 ist ein Verfahren nach einem der Ausführungsbeispiele 1 bis 3, wobei das neuronale Netzwerk als Eingabe für jedes Paar der mehreren Paare der Kombinationen den Abstand zwischen den Positionsvorhersagen, die für das Objekt gemäß der Kombinationen des Paares ermittelt wurden, sowie ein oder mehrere Ergebnisse einer Objektdetektion mittels der Sensordatensätze erhält und trainiert ist, aus der Eingabe die Konfidenzinformation zu ermitteln.

Die ein oder mehreren Ergebnisse der Objektdetektion sind beispielsweise Position, Abmessung, Klassenzugehörigkeit (z.B. als Soft-Value) und Orientierung der Objekte (und zumindest ein Teil davon). Diese Eingaben erhöhen die Genauigkeit der Schätzung der Konfidenzinformationen.

Ausführungsbeispiel 5 ist ein Verfahren nach einem der Ausführungsbeispiele 1 bis 4, wobei die Menge von Objekten mehrere Objekte enthält und das neuronale Netzwerk so eingerichtet ist, dass es invariant gegenüber einer Permutation der Objekte ist.

Damit ist gewährleistet, dass die Konfidenzinformation so ermittelt wird, dass sie unabhängig davon ist, wie die Objekte nummeriert werden.

Ausführungsbeispiel 6 ist ein Verfahren nach Ausführungsbeispiel 5, wobei das neuronale Netzwerk ein Pooling über Verarbeitungsergebnisse unterschiedlicher Objekte aufweist.

Auf diese Weise kann auf einfache Weise Invarianz gegenüber Permutationen der Objekte erreicht werden.

Ausführungsbeispiel 7 ist ein Verfahren nach einem der Ausführungsbeispiele 1 bis 6, wobei das neuronale Netzwerk eingerichtet ist, für eine variable Anzahl von Objekten Eingabedaten zu verarbeiten, die für jedes der Objekte die Abstände zwischen Positionsvorhersagen für die Paare der Kombinationen enthält.

Damit kann das neuronale Netzwerk für unterschiedliche Anzahlen von Objekten trainiert werden und für solche eingesetzt werden, d.h. eingesetzt werden unabhängig davon, wie viele Objekte von den Sensoren erfasst werden. Dies kann z.B. dadurch erreicht werden, dass die Eingabedaten pro Objekt in einem Eingabedatenelement (z.B. einem Vektor) abgelegt werden und das neuronale Netzwerk eingerichtet ist, eine Konvolution über die Eingabedatenelemente durchzuführen, da eine Konvolution auf eine variable Anzahl von solchen Eingabedatenelementen angewendet werden kann. Im Anschluss an die Konvolution kann beispielsweise ein Pooling der Konvolutionsergebnisse über die Objekte durchgeführt werden, sodass ein Verarbeitungsergebnis erzeugt wird, dessen Dimension unabhängig von der Anzahl der Objekte ist.

Ausführungsbeispiel 8 ist ein Verfahren nach einem der Ausführungsbeispiele 1 bis 7, aufweisend Trainieren des neuronalen Netzwerks mittels überwachten Lernens unter Verwendung von Trainingsdatenelementen, wobei jedes Trainingsdatenelement ein Trainings-Eingabeelement mit, für jedes Paar der Kombinationen, eines Abstands zwischen Positionsvorhersagen für ein oder mehrere Objekte mit bekannter Position und ein Trainings-Ziel-Ausgabeelement aufweist, wobei das Trainings-Ziel-Ausgabeelement für jede der Kombinationen eine Trainings-Ziel-Ausgabe für die Konfidenzinformation aufweist, die gegeben ist durch, für jedes der ein oder mehreren Objekte, einen Abstand zwischen der Positionsvorhersage für das Objekt gemäß der Kombination und der bekannten Position des Objekts.

Beispielsweise können die Abstände über die Objekte gemittelt werden, um die Trainings-Ziel-Ausgabe für die Kombination zu ermitteln oder es kann pro Objekt eine Konfidenzinformation (d.h. ein Konfidenzwert) aus dem jeweiligen Abstand ermittelt werden und diese Konfidenzwerte über die Objekte gemittelt werden.

Ausführungsbeispiel 9 ist eine Robotersteuereinrichtung, die eingerichtet ist, ein Verfahren nach einem der Ausführungsbeispiele 1 bis 8 durchzuführen.

Ausführungsbeispiel 10 ist ein Computerprogramm mit Befehlen, die, wenn sie durch einen Prozessor ausgeführt werden, bewirken, dass der Prozessor ein Verfahren nach einem der Ausführungsbeispiele 1 bis 8 durchführt.

Ausführungsbeispiel 11 ist ein Computer-lesbares Medium, das Befehle speichert, die, wenn sie durch einen Prozessor ausgeführt werden, bewirken, dass der Prozessor ein Verfahren nach einem der Ausführungsbeispiele 1 bis 8 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.

Figur 1 zeigt ein Fahrzeug.

Figur 2 zeigt ein Beispiel einer Mehrwege-Architektur für eine multimodale Sensorfusion.

Figur 3 veranschaulicht das Ermitteln von Konfidenzinformation für Modalitäten gemäß einer Ausführungsform.

Figur 4 veranschaulicht die Abstände zwischen Positionsschätzungen zweier Modalitäten und die Abstände zur wahren Objektposition für die Ground-Truth.

Figur 5 zeigt ein Ablaufdiagramm, das ein Verfahren zum Steuern einer Robotervorrichtung gemäß einer Ausführungsform darstellt.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

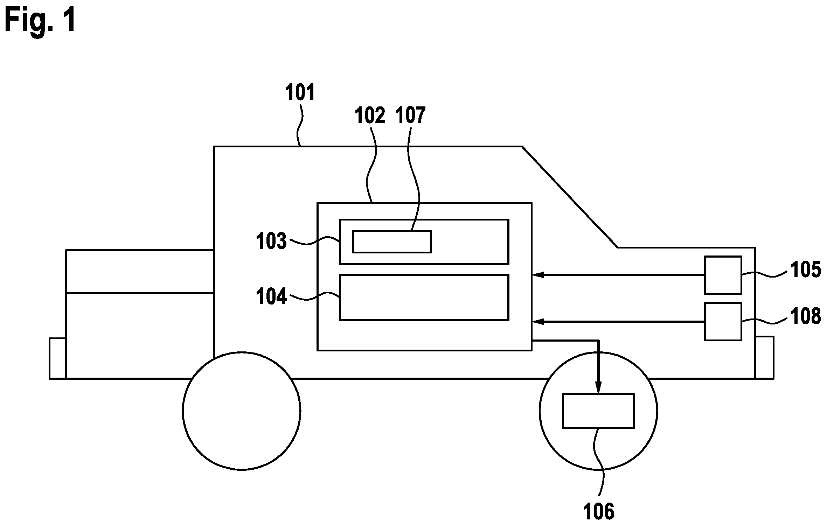

Figur 1 zeigt ein Fahrzeug 101.

Das Fahrzeug 101, beispielsweise ein PKW oder LKW, ist mit einer Fahrzeugsteuereinrichtung 102 versehen.

Die Fahrzeugsteuereinrichtung 102 weist Datenverarbeitungskomponenten auf, z.B. einen Prozessor (z.B. eine CPU (Zentraleinheit)) 103 und einen Speicher 104 zum Speichern von Steuersoftware, gemäß der die Fahrzeugsteuereinrichtung 102 arbeitet, und Daten, die von dem Prozessor 103 verarbeitet werden.

Beispielsweise weist die gespeicherte Steuerungssoftware(Computerprogramm)-Anweisungen auf, die, wenn der Prozessor sie ausgeführt, bewirken, dass der Prozessor 103 ein oder mehrere neuronale Netzwerke 107 implementiert.

Die im Speicher 104 gespeicherten Daten können beispielsweise Bilddaten beinhalten, die von einer oder mehreren Kameras 105 erfasst werden. Die eine oder mehreren Kameras 105 können beispielsweise ein oder mehrere Graustufen- oder Farbfotos der Umgebung des Fahrzeugs 101 aufnehmen.

Die Fahrzeugsteuereinrichtung 102 kann basierend auf den Bilddaten ermitteln, ob und welche Objekte, z.B. feste Objekte wie Verkehrzeichen oder Straßenmarkierungen oder bewegliche Objekte wie Fußgänger, Tiere und andere Fahrzeuge in der Umgebung des Fahrzeugs 101 vorhanden sind, d.h. eine Objektdetektion durchführen.

Das Fahrzeug 101 kann dann von der Fahrzeugsteuereinrichtung 102 gemäß den Ergebnissen der Objektdetektion gesteuert werden. So kann die Fahrzeugsteuereinrichtung 102 beispielsweise einen Aktuator 106 (z.B. eine Bremse) steuern, um die Geschwindigkeit des Fahrzeugs zu steuern, z.B. um das Fahrzeug zu bremsen.

Es können aber auch zusätzlich ein oder mehrere andere Sensoren 108 als eine optische Kamera 105 (oder auch mehrere Kameras 105) vorgesehen sein. Beispiele hierfür sind Radar-Sensoren, LiDAR-Sensoren, Ultraschall-Sensoren, oder auch Wärmebildkameras.

Diese Sensoren (inkl. Kameras) haben unterschiedliche Vorteile, und diese Vorteile sollten typischerweise in geeigneter Weise genutzt werden, um eine hohe Zuverlässigkeit, z.B. einer Objektdetektion (ggf. inkl. Objekterkennung) zu erzielen. Zum Beispiel liefert der Lidar-Sensor eine 3D-Punktwolke mit hoher Auflösung und ist in Bezug auf die Auflösung normalerweise besser als ein Radarsensor. Ein Radarsensor kann dafür aber Wassermoleküle ohne Abschwächung durchdringen. Daher kann er bei jeder Art von Wetterbedingungen eingesetzt werden. Außerdem kann man bei einem Radarsensor aufgrund des Doppler-Effekts eine Schätzung der Radialgeschwindigkeit von detektierten Objekten erhalten, was einen zusätzlichen Vorteil des Radarsensors darstellt. Eine optische Kamera bietet wiederum eine (noch) bessere Auflösung, was bei der Segmentierung und Klassifizierung von Objekten hilfreich ist.

Die Sensoren (d.h. die von ihnen gelieferten Sensordaten) können auf verschiedenen Ebenen fusioniert werden. Bei der frühen Sensorfusion werden normalerweise die Rohdaten der verschiedenen Sensoren fusioniert, um eine Objekthypothese für die Umgebung zu erstellen. Bei der späten Fusion führt jeder Sensor eine Trennungsvorhersage durch, und dann werden die Ergebnisse der einzelnen Sensoren fusioniert. In verschiedenen Anwendungen, wie z.B. dem automatisierten Fahren (AD), werden aus Sicherheitsgründen typischerweise verschiedene Stufen der Fusion notwendig, um redundante Vorhersagen der Umgebung zu generieren.

Um dem Vorzubeugen, dass eine schlechte Messqualität eines Sensors die Qualität des Ergebnisses der Sensorfusion beeinträchtigt, kann eine Mehrwege-Architektur verwendet werden, wie sie in Referenz 1 beschrieben ist.

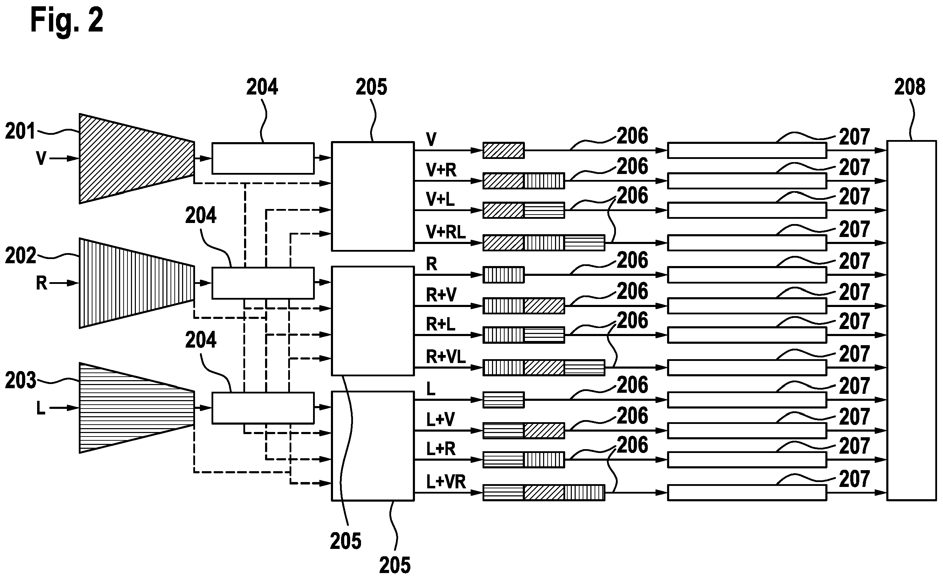

Figur 2 zeigt ein Beispiel einer Mehrwege-Architektur für eine multimodale Sensorfusion.

In diesem Beispiel liefern drei Sensoren (z.B. ein Videosensor V, ein Radarsensor R und ein Lidarsensor L) Sensordaten.

Für jeden der Sensoren gibt es einen jeweiligen Pfad 201, 202, 203 und es werden jeweilige Objekthypothesen 204 aus den Sensordaten des Sensors ermittelt. Es wird dann jeweils eine Merkmalsselektion 205 und Merkmalskombination durchgeführt, die von den Objekthypothesen des jeweiligen Pfads ausgeht und je nach Modalität Sensordaten der anderen Sensoren einbezieht. Damit entsteht pro Modalität ein Zweig 206. Der vierte Zweig von oben, der mit V + RL bezeichnet ist, entspricht beispielsweise einer Modalität, bei der die Objekthypothesen unter Verwendung er Videodaten (V) ermittelt wurden und die Merkmalsselektion und -Kombination Sensordaten des Radarsensors (R) und des Lidarsensors (L) mit einbezieht.

Für jeden der Zweige 206 wird dann beispielsweise eine Klassifikation und Regression (z.B. zur Ermittlung der Bounding-Box eines Objekts und seiner Klassifikation) 207 durchgeführt. Die Ergebnisse der Klassifikationen und Regressionen 207 aus den Zweigen 206 können dann in 208 kombiniert, z.B. objektbasiert fusioniert werden. Es kann auch einfach das Ergebnis aus einem der Zweige 206 ausgewählt werden.

Unabhängig davon, ob die Ergebnisse aus den Zweigen 206 einfach ausgewählt werden oder auf komplizrertere Art kombiniert werden, ist es wünschenswert, zu erreichen, ein Ergebnis eines der Zweige 206, das aufgrund einer schlechten Messqualität eines der Sensoren (z.B. weil es regnet) eine geringe Genauigkeit hat, möglichst aus der Ermittlung des Endergebnisses (d.h. des Ergebnisses von 208) auszuschließen oder zumindest gering zu gewichten.

Deshalb wird gemäß verschiedenen Ausführungsformen eine Herangehensweise zur Ermittlung jeweils einer Konfidenz mehrerer Modalitäten (d.h. einer Konfidenzinformation für das Ergebnis für die jeweilige Modalität, d.h. aus dem jeweiligen Zweig 206) bereitgestellt.

Diese Herangehensweise kann nicht nur auf eine Mehrwege-(Fusions- )Architektur wie in Figur 2 dargestellt angewendet werden sondern für jedes Objektdetektions- oder Objektverfolgungssystem eingesetzt werden, das redundante Pfade (bzw. Zweige oder Wege) aufweist, bei der unterschiedliche Sensoren zu den Pfaden beitragen.

Gemäß verschiedenen Ausführungsformen wird insbesondere eine auf Permutations-invariantem maschinellen Lernen (ML) basierende Schätzung von Konfidenzen unter Verwendung einer Distanzmetrik zwischen den Modalitäten (d.h. ihrer Ergebnisse) bereitstellt, also eine Herangehensweise, die die Abhängigkeiten zwischen den Modalitäten berücksichtigt. Die Distanzen zwischen zwei Modalitäten, z.B. zwischen den Bounding-Boxes für ein Objekt, die für die Modalitäten ermittelt werden, wird beispielsweise der Mahalbonis-Abstand verwendet.

Gemäß verschiedenen Ausführungsformen ist die Konfidenz einer Modalität ein Wert (z.B. zwischen 0 und 1), die den Abstand der Positionsschätzung (z.B.

Bounding-Box) aus einer Modalität zu der korrekten Position des Objekts angibt.

Gemäß dem folgenden Ausführungsbeispiel wird eine Szene (z.B. die Umgebung eines Fahrzeugs) in Bereiche eingeteilt und es wird angenommen, dass die Konfidenz einer Modalität dieselbe für alle Objekte in dem Bereich ist. Dementsprechend gehen bei dem folgenden Ausführungsbeispiel die Objektdetektionsergebnisse aller Objekte in dem Bereich ein.

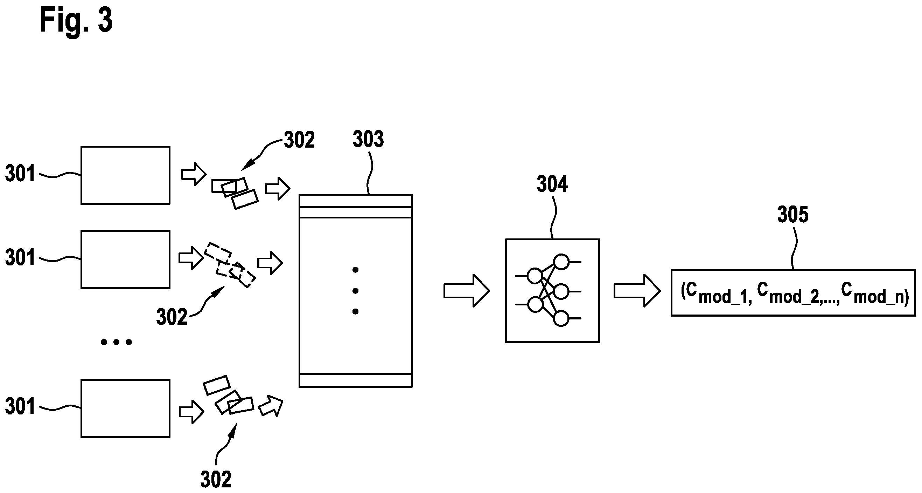

Figur 3 veranschaulicht das Ermitteln von Konfidenzinformation für Modalitäten gemäß einer Ausführungsform.

Es wird angenommen, dass für mehrere Modalitäten 301 jeweils ein Ergebnis einer Objektdetektion geliefert wird, z.B. Position, Abmessung, Klassenzugehörigkeit (z.B. als Soft-Value), Orientierung und insbesondere eine jeweilige Bounding-Box 302 für (in diesem Beispiel) jedes von mehreren Objekten (aus einem Bereich einer Szene).

Aus den Bounding-Boxes 302 wird eine Eingabematrix 303 für ein neuronales Netzwerk 304 gebildet.

Jede Zeile der Eingabematrix 303 ist einem der Objekte zugeordnet. Für dieses Objekt enthält die Zeile für jedes Paar der Modalitäten 301 den Abstand (z.B. Mahalbonis-Abstand) zwischen den Bounding-Boxes, die für das Objekt für die beiden Modalitäten aus dem Paar ermittelt wurden. Wenn für eine Modalität keine Position geschätzt werden könnte, wird beispielsweise als Distanz (zu der Schätzung anderer Modalitäten) ein Maximalwert verwendet.

Bei einer Anzahl von $m$ Modalitäten ergibt dies einen Vektor von $n_2 = m * (m\text{-}1)/2$ Einträgen für jedes Objekt.

Ist $n_1$ die Anzahl der Objekte in dem Bereich (die variabel sein kann) enthält die Eingabematrix 303 also mindestens eine Matrix der Größe $n_1 \times n_2$. Die Eingabematrix 303 kann aber pro Objekt noch weitere Einträge enthalten wie beispielsweise die für die Modalitäten geschätzten Positionen der Bounding-Boxen für das jeweilige Objekt, der für die Modalitäten geschätzten Größen der Bounding-Boxes, die für die Modalitäten vorhergesagten Klassen der Objekte, den Mittelwert der geschätzten Positionen des Objekts über die Modalitäten und der Varianz der geschätzten Positionen des Objekts über die Modalitäten etc.

Das neuronale Netzwerk 304 wird so trainiert, dass es aus der Eingabematrix 303 eine Ausgabe 305 liefert, die für jede Modalität (bzw. das für die Modalität ermittelte Ergebnis, z.B. die Positionsvorhersage) eine Konfidenz enthält, d.h. einen Vektor

$$(C_{mod\_1}, C_{mod\_2}, ..., C_{mod\_n})$$

Für das Training des neuronalen Netzwerks wird für den Vektor ein Ground-Truth-Vektor (d.h. Ziel-Ausgabe-Vektor)

$$(C_{mod\_1_{fin}}, C_{mod\_2_{fin}}, \dots, C_{mod\_n\_fin})$$

für ein Trainingsdatenelement (mit bekannten Objektpositionen) erzeugt.

Der Eintrag $C_{mod\_ifin}$ des Ground-Truth-Vektors für die i-te Modalität ergibt sich aus der Entfernung zwischen der Positionsschätzung für die Modalität und der tatsächlichen Objektposition, gemittelt über die Objekte.

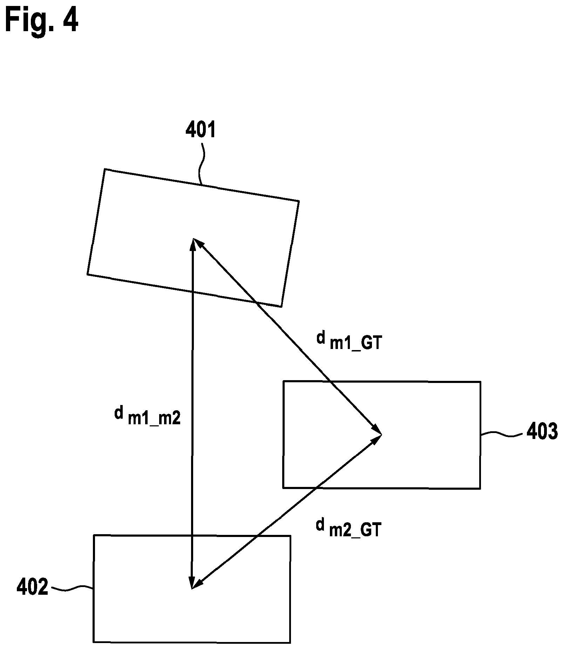

Figur 4 veranschaulicht die Abstände zwischen Positionsschätzungen zweier Modalitäten und die Abstände zur wahren Objektposition für die Ground-Truth.

Eine erste Bounding-Box 401 ist das Ergebnis einer Objektdetektion für eine erste Modalität. Eine zweite Bounding-Box 402 ist das Ergebnis einer Objektdetektion für eine zweite Modalität. Eine dritte Bounding-Box 403 entspricht der korrekten Objektposition.

Als Eintrag in der Eingabematrix 303 für das Objekt (also die jeweilige Zeile) und das Paar von Modalitäten (also die jeweilige Spalte) wird der Abstand $d_{m1\_m2}$ zwischen den beiden Bounding-Boxes 402, 403 für die Modalitäten verwendet.

Als Ground-Truth-Beitrag für dieses Objekt (es werden diese über alle Objekte gemittelt) wird für die i-te beiden Modalität

$$C_{mod\_i_{fin}} = e^{-\gamma d_{mi\_GT}}$$

verwendet (wobei vor Anwendung oder nach Anwendung er Exponentialfunktion über die Objekte gemittelt werden kann, d.h. es kann $C_{mod\_ifin}$ über alle Objekte gemittelt werden oder die Abstände gemittelt werden).

Gleichbedeutend ist

$$d_{mi\_GT} = -\frac{1}{\gamma} \ln \left( C_{mod\_i_{fin}} \right)$$

wobei $d_{mi\_GT}$ im Beispiel von Figur 4 der Abstand $d_{m1\_GT}$ zwischen der für die erste Modalität geschätzten Bounding-Box 401 und der korrekten Bounding-Box 403 bzw. der Abstand $d_{m2\_GT}$ zwischen der für die zweite Modalität geschätzten Bounding-Box 402 und der korrekten Bounding-Box 403 ist.

Die obige Verwendung der Exponentialfunktion liefert eine hohe Konfidenz für geringe Abstände und eine geringe Konfidenz für hohe Abstände. Ein hoher Abstand entspricht einer geringen Konfidenz, da bei einem hohen Abstand (d.h. einem großen Fehler bei der Schätzung für die Modalität) der Modalität wenig vertraut werden sollte. Der Konfidenzwert $C_{mod\_ifin}$ liegt im Bereich [0, 1].

Wie oben erwähnt wird im obigen Beispiel die Konfidenz pro Bereich einer Szene ermittelt und angenommen, dass die Konfidenz für alle Objekt in dem Bereich gleich ist. Die Konfidenz kann alternativ aber auch für eine gesamte Szene oder auch nur für einzelne Objekte ermittelt werden. Da die Genauigkeit jedes Sensors für jedes Objekt von der Distanz des Objekts von dem Sensor abhängt und manche Objekte einer Szene für einen Sensor verdeckt sein können, während andere es nicht sind, liefert die Ermittlung einer gemeinsamen Konfidenz für alle Objekte der Szene möglicherweise keine gute Schätzung. Die größte Genauigkeit kann mit einer Konfidenz pro individuellem Objekt erreicht werden, aber eine gemeinsame Konfidenz (z.B. für Objekte in einem Bereich) ermöglicht die Unabhängigkeit von der Objektverfolgung.

Die Schätzung der Konfidenzen ($C_{mod\_1}$, $C_{mod\_2}$, … , $C_{mod\_n}$) sollte unabhängig sein von einer Permutation der Zeilen der Eingabematrix 303, da dies lediglich einer Umnummerierung der Objekte entspricht. Gegenüber einer Spaltenpermutation sollte die Schätzung hingegen nicht invariant sein, da die Spalten unterschiedlichen Attributen bzw. Paaren von Modalitäten entsprechen.

Um Permutationsinvarianz des neuronalen Netzwerks 304 hinsichtlich der Zeilen (und damit Gleichbehandlung der Objekte) zu erreichen, kann eine Funktion wie Minimum, Maximum, Multiplikation, Addition etc. über die Zeilen in Spaltenrichtung pro Spalte in das neuronale Netzwerk eingefügt werden. Alternativ können im neuronalen Netzwerk dieselben Gewichte für die Verarbeitung unterschiedlicher Zeilen verwendet werden.

Gemäß einer Ausführungsform wird eine Max-Pooling-Schicht verwendet. Beispielsweise enthält das neuronale Netzwerk 304 eine 1D-Konvolutionsschicht, die für jede Spalte eine 1D-Konvolution über die Zeileneinträge der Spalte durchführt und dann ein Max-Pooling über den erhaltenen (Spalten-)Vektor durchführt.

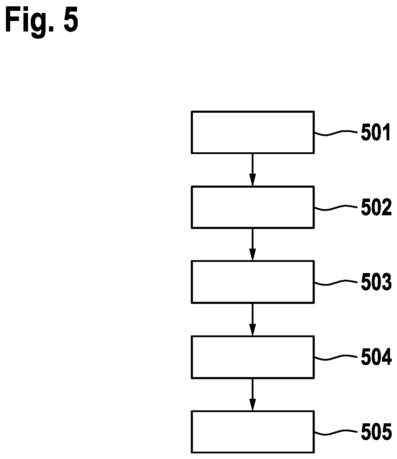

Zusammengefasst wird gemäß verschiedenen Ausführungsformen ein Verfahren bereitgestellt, wie in Figur 5 dargestellt.

Figur 5 zeigt ein Ablaufdiagramm 500, das ein Verfahren zum Steuern einer Robotervorrichtung gemäß einer Ausführungsform darstellt.

In 501 wird von jedem Sensor mehrerer Sensoren ein jeweiliger Sensordatensatz von dem Sensor empfangen.

In 502 wird für jedes Objekt einer Menge von Objekten, die mindestens ein Objekt enthält, für jede mehrerer unterschiedlicher Kombinationen der Sensordatensätze, eine Positionsvorhersage für das Objekt mittels Sensordatenfusion der Sensordatensätze gemäß der Kombination der Sensordatensätze ermittelt.

In 503 wird für jedes Objekt der Menge von Objekten, für jedes Paar mehrerer Paare der Kombinationen ein Abstands zwischen den Positionsvorhersagen, die für das Objekt gemäß der Kombinationen des Paares ermittelt wurden, ermittelt.

In 504 werden die ermittelten Abstände einem neuronalen Netzwerk zugeführt, das trainiert ist, aus Abständen zwischen Positionsvorhersagen für die Paare der Kombinationen Konfidenzinformation für die Positionsvorhersagen zu ermitteln.

In 505 wird die Robotervorrichtung unter Verwendung einer oder mehrerer der Positionsvorhersagen unter Berücksichtigung der Konfidenzinformation gesteuert.

Jede Kombination entspricht einer Modalität der Sensorfusion, d.h. einer bestimmten Kombination von Sensoren, die zu einem jeweiligen Zweig eines Sensorfusionssystems mit Mehrwege-Architektur wie in Figur 2 gezeigt, beitragen. Das Sensorfusionssystem liefert für jede Modalität Schätzungen (Ergebnisse) wie Positionen von Objekten, Abmessungen von Objekten, Orientierungen von Objekten, Klassenzugehörigkeiten von Objekten (z.B. in Form von Soft-Values) etc.

Das Verfahren von Figur 5 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

In den obigen detaillierten Ausführungsbeispiel ist eine Anwendung für autonomes Fahren beschrieben, aber die oben beschriebene Herangehensweise kann auch für andere Anwendungen verwendet werden, bei denen eine Sensorfusion durchgeführt wird, und sie ist auch nicht auf die oben genannten Sensoren (d.h. Sensortypen) beschränkt.

Allgemein dient die Herangehensweise von Figur 5 zum Erzeugen eines Steuersignals für eine Robotervorrichtung. Der Begriff "Robotervorrichtung" kann als sich auf irgendein technisches System (mit einem mechanischen Teil, dessen Bewegung gesteuert wird) beziehend verstanden werden, wie z. B. eine computergesteuerte Maschine, ein Fahrzeug, ein Haushaltsgerät, ein Elektrowerkzeug, eine Fertigungsmaschine, einen persönlichen Assistenten oder ein Zugangssteuersystem.

Verschiedene Ausführungsformen können Sensorsignale von verschiedenen Sensoren wie z. B. Video, Radar, LiDAR, Ultraschall, Bewegung, Wärmeabbildung usw. empfangen und verwenden, beispielsweise um Sensordaten hinsichtlich Demonstrationen oder Zuständen des Systems (Roboter und Objekt oder Objekte) und Konfigurationen und Szenarios zu erhalten. Die Sensordaten können verarbeitet werden. Dies kann die Klassifikation der Sensordaten oder das Durchführen einer semantischen Segmentierung an den Sensordaten umfassen, beispielsweise um die Anwesenheit von Objekten (in der Umgebung, in der die Sensordaten erhalten wurden) zu detektieren. Ausführungsformen können zum Trainieren eines Maschinenlernsystems und Steuern einer Roboter, z. B. autonom von Robotermanipulatoren, um verschiedene Manipulationsaufgaben unter verschiedenen Szenarios zu erreichen, verwendet werden. Insbesondere sind Ausführungsformen auf die Steuerung und Überwachung der Ausführung von Manipulationsaufgaben anwendbar, z. B. in Montagelinien.

Obwohl spezielle Ausführungsformen hier dargestellt und beschrieben wurden, wird vom Fachmann auf dem Gebiet erkannt, dass die speziellen Ausführungsformen, die gezeigt und beschrieben sind, gegen eine Vielfalt von alternativen und/oder äquivalenten Implementierungen ausgetauscht werden können, ohne vom Schutzbereich der vorliegenden Erfindung abzuweichen. Diese Anmeldung soll irgendwelche Anpassungen oder Variationen der speziellen Ausführungsformen abdecken, die hier erörtert sind. Daher ist beabsichtigt, dass diese Erfindung nur durch die Ansprüche und die Äquivalente davon begrenzt ist.

**Patentansprüche**

1.   Verfahren zum Steuern einer Robotervorrichtung, aufweisend:

  Empfangen, von jedem Sensor mehrerer Sensoren, eines jeweiligen Sensordatensatzes von dem Sensor;
  Ermitteln, für jedes Objekt einer Menge von Objekten, die mindestens ein Objekt enthält, für jede mehrerer unterschiedlicher Kombinationen der Sensordatensätze, einer Positionsvorhersage für das Objekt mittels Sensordatenfusion der Sensordatensätze gemäß der Kombination der Sensordatensätze;
  Ermitteln, für jedes Objekt der Menge von Objekten, für jedes Paar mehrerer Paare der Kombinationen eines Abstands zwischen den Positionsvorhersagen, die für das Objekt gemäß der Kombinationen des Paares ermittelt wurden;
  Zuführen der ermittelten Abstände zu einem neuronalen Netzwerk, das trainiert ist, aus Abständen zwischen Positionsvorhersagen für die Paare der Kombinationen Konfidenzinformation für die Positionsvorhersagen zu ermitteln; und
  Steuern der Robotervorrichtung unter Verwendung einer oder mehrerer der Positionsvorhersagen unter Berücksichtigung der Konfidenzinformation.

2. Verfahren nach Anspruch 1, wobei die Menge von Objekten mehrere Objekte enthält.

3. Verfahren nach Anspruch 2, wobei die Menge von Objekten Objekte in einem vorgegebenen Teilbereich einer von den Sensoren erfassten Umgebung der Robotervorrichtung aufweist.

4. Verfahren nach einem der Ansprüche 1 bis 3, wobei das neuronale Netzwerk als Eingabe für jedes Paar der mehreren Paare der Kombinationen den Abstand zwischen den Positionsvorhersagen, die für das Objekt gemäß der Kombinationen des Paares ermittelt wurden, sowie ein oder mehrere Ergebnisse einer Objektdetektion mittels der Sensordatensätze erhält und trainiert ist, aus der Eingabe die Konfidenzinformation zu ermitteln.

5. Verfahren nach einem der Ansprüche 1 bis 4, wobei die Menge von Objekten mehrere Objekte enthält und das neuronale Netzwerk so eingerichtet ist, dass es invariant gegenüber einer Permutation der Objekte ist.

6. Verfahren nach Anspruch 5, wobei das neuronale Netzwerk ein Pooling über Verarbeitungsergebnisse unterschiedlicher Objekte aufweist.

7. Verfahren nach einem der Ansprüche 1 bis 6, wobei das neuronale Netzwerk eingerichtet ist, für eine variable Anzahl von Objekten Eingabedaten zu verarbeiten, die für jedes der Objekte die Abstände zwischen Positionsvorhersagen für die Paare der Kombinationen enthält.

8. Verfahren nach einem der Ansprüche 1 bis 7, aufweisend Trainieren des neuronalen Netzwerks mittels überwachten Lernens unter Verwendung von Trainingsdatenelementen, wobei jedes Trainingsdatenelement ein Trainings-Eingabeelement mit, für jedes Paar der Kombinationen, eines Abstands zwischen Positionsvorhersagen für ein oder mehrere Objekte mit bekannter Position und ein Trainings-Ziel-Ausgabeelement aufweist, wobei das Trainings-Ziel-Ausgabeelement für jede der Kombinationen eine Trainings-Ziel-Ausgabe für die Konfidenzinformation aufweist, die gegeben ist durch, für jedes der ein oder mehreren Objekte, einen Abstand zwischen der Positionsvorhersage für das Objekt gemäß der Kombination und der bekannten Position des Objekts.

9. Robotersteuereinrichtung, die eingerichtet ist, ein Verfahren nach einem der Ansprüche 1 bis 8 durchzuführen.

10. Computerprogramm mit Befehlen, die, wenn sie durch einen Prozessor ausgeführt werden, bewirken, dass der Prozessor ein Verfahren nach einem der Ansprüche 1 bis 8 durchführt.

11. Computerlesbares Medium, das Befehle speichert, die, wenn sie durch einen Prozessor ausgeführt werden, bewirken, dass der Prozessor ein Verfahren nach einem der Ansprüche 1 bis 8 durchführt.

**Claims**

1. Method for controlling a robot apparatus, comprising:

   receiving, from each sensor of multiple sensors, a respective sensor data set from the sensor;
   determining, for each object in a set of objects containing at least one object, for each of multiple different combinations of sensor data sets, a position prediction for the object by means of sensor data fusion of the sensor data sets according to the combination of sensor data sets;
   determining, for each object in the set of objects, for each pair of multiple pairs of combinations, a distance between the position predictions determined for the object according to the combinations in the pair;
   supplying the determined distances to a neural network trained to obtain confidence information for the position predictions from distances between position predictions for the pairs of combinations; and
   controlling the robot apparatus using one or more of the position predictions in consideration of the confidence information.

2. Method according to Claim 1, wherein the set of objects contains multiple objects.

3. Method according to Claim 2, wherein the set of objects comprises objects in a specified subregion of surroundings of the robot apparatus that are sensed by the sensors.

4. Method according to one of Claims 1 to 3, wherein the neural network obtains, as input for each pair of the multiple pairs of combinations, the distance between the position predictions determined for the object according to the combinations in the pair, and one or more results of an object detection by means of the sensor data sets, and is trained to determine the confidence information from the input.

5. Method according to one of Claims 1 to 4, wherein the set of objects contains multiple objects and the neural network is configured in such a way that it is invariant with respect to a permutation of the objects.

**6.** Method according to Claim 5, wherein the neural network has a pooling over processing results of different objects.

**7.** Method according to one of Claims 1 to 6, wherein the neural network is configured to process input data for a variable number of objects, which input data contain, for each of the objects, the distances between position predictions for the pairs of combinations.

**8.** Method according to one of Claims 1 to 7, comprising training the neural network by means of supervised learning using training data elements, wherein each training data element comprises a training input element comprising, for each pair of combinations, a distance between position predictions for one or more objects with a known position and a training target output element, the training target output element comprising, for each of the combinations, a training target output for the confidence information which is provided by, for each of the one or more objects, a distance between the position prediction for the object according to the combination and the known position of the object.

**9.** Robot control device configured to carry out a method according to one of Claims 1 to 8.

**10.** Computer program containing commands which, when executed by a processor, cause the processor to carry out a method according to one of Claims 1 to 8.

**11.** Computer-readable medium which stores commands which, when executed by a processor, cause the processor to carry out a method according to one of Claims 1 to 8.

**Revendications**

**1.** Procédé de commande d'un dispositif robot, comportant :

réception, de chaque capteur de plusieurs capteurs, d'un ensemble de données de capteur respectif provenant du capteur ;
détermination, pour chaque objet d'une quantité d'objets, qui contient au moins un objet, pour chacune de plusieurs combinaisons différentes des ensembles de données de capteur, d'une prédiction de position pour l'objet au moyen d'une fusion de données de capteur des ensembles de données de capteur selon la combinaison des ensembles de données de capteur ;
détermination, pour chaque objet de la quantité d'objets, pour chaque paire de plusieurs paires des combinaisons, d'une distance entre les prédictions de position qui ont été déterminées pour l'objet selon les combinaisons de la paire ;
fourniture des distances déterminées à un réseau neuronal qui est entraîné pour déterminer des informations de confiance pour les prédictions de position à partir de distances entre les prédictions de position pour les paires des combinaisons ; et
commande du dispositif robot en utilisant une ou plusieurs prédictions de position en tenant compte des informations de confiance.

**2.** Procédé selon la revendication 1, la quantité d'objets contenant plusieurs objets.

**3.** Procédé selon la revendication 2, la quantité d'objets comportant des objets dans une zone partielle prédéfinie d'un environnement du dispositif robot détecté par les capteurs.

**4.** Procédé selon l'une des revendications 1 à 3, le réseau neuronal obtenant, en tant qu'entrée pour chaque paire des plusieurs paires des combinaisons, la distance entre les prédictions de position, qui ont été déterminées pour l'objet selon les combinaisons de la paire, et un ou plusieurs résultats d'une détection d'objet au moyen des ensembles de données de capteur et étant entraîné pour déterminer les informations de confiance à partir de l'entrée.

**5.** Procédé selon l'une des revendications 1 à 4, la quantité d'objets contenant plusieurs objets et le réseau neuronal étant mis au point de telle sorte qu'il est invariant vis-à-vis d'une permutation des objets.

**6.** Procédé selon la revendication 5, le réseau neuronal comportant une mise en commun des résultats de traitement de différents objets.

**7.** Procédé selon l'une des revendications 1 à 6, le réseau neuronal étant mis au point pour traiter, pour un nombre variable d'objets, des données d'entrée qui contiennent, pour chacun des objets, les distances entre des prédictions de position pour les paires des combinaisons.

**8.** Procédé selon l'une des revendications 1 à 7, comportant l'entraînement du réseau neuronal au moyen d'un apprentissage supervisé en utilisant des éléments de données d'entraînement, chaque élément de données d'entraînement comportant un élément d'entrée d'entraînement avec, pour chaque paire des combinaisons, une distance entre des prédictions de position pour un ou plusieurs objets avec une position connue et un élément de sortie cible d'entraînement, l'élément de sortie cible d'entraînement pour chacune des combinaisons comportant une sortie cible d'entraînement pour les informations de confiance qui est donnée, pour chacun des un ou plusieurs objets, par une distance entre la prédiction de position de l'objet selon la combinaison et la position connue de l'objet.

9. Equipement de commande de robot, qui est mis au point pour mettre en œuvre un procédé selon l'une des revendications 1 à 8.

10. Programme informatique avec des instructions qui, lorsqu'elles sont exécutées par un processeur, amènent le processeur à mettre en œuvre un procédé selon l'une des revendications 1 à 8.

11. Support lisible par ordinateur stockant des instructions qui, lorsqu'elles sont exécutées par un processeur, amènent le processeur à mettre en œuvre un procédé selon l'une des revendications 1 à 8.

**Fig. 1**

Fig. 2

**Fig. 3**

EP 4 526 842 B1

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018222526 A1
- US 20210117787 A1